# EUROPÄISCHE PATENTSCHRIFT

(11) **EP 4 473 272 B1**
(45) Veröffentlichungstag und Bekanntmachung des Hinweises auf die Patenterteilung: **10.12.2025**
(21) Anmeldenummer: 23703011.9
(22) Anmeldetag: 31.01.2023
(51) Int. Cl.: G01D 21/00, B60T 7/04, F16D 66/00

(54) **SENSORMODUL**
SENSOR MODULE
MODULE DE CAPTEUR

(30) Priorität: 02.02.2022 DE 102022201111
(43) Veröffentlichungstag der Anmeldung: 11.12.2024
(73) Patentinhaber: Robert Bosch GmbH, 70442 Stuttgart (DE)
(72) Erfinder: KURSAWE, Frank, 74199 Untergruppenbach (DE)
(86) Internationale Anmeldenummer: PCT/EP2023/052281
(87) Internationale Veröffentlichungsnummer: WO 2023/148151

(56) Entgegenhaltungen:
- EP-A1- 3 531 081
- DE-A1- 10 054 745
- DE-A1- 102009 008 483
- DE-A1- 102019 202 011

## Beschreibung

Die Erfindung betrifft ein Sensormodul mit zumindest zwei Sensoreinheiten, einem Steuergerät, das dazu ausgebildet ist, eine elektrische Versorgungsspannung für die Sensoreinheiten einzustellen, und mit zumindest einem Sensorsignalausgang, wobei die zumindest zwei Sensoreinheiten mit dem Steuergerät elektrisch verbindbar oder von diesem elektrisch trennbar und mit dem Sensorsignalausgang elektrisch verbunden sind, wobei eine erste der Sensoreinheiten in einem Normalbetrieb des Sensormoduls ein erstes Ausgangssignal durch den Sensorsignalausgang und eine zweite der Sensoreinheiten in einem Energiesparbetrieb des Sensormoduls ein zweites Ausgangssignal durch den Sensorsignalausgang bereitstellt, und wobei dem Steuergerät eine Entscheidereinheit zugeordnet ist, die dazu ausgebildet ist, entweder die erste Sensoreinheit oder die zweite Sensoreinheit elektrisch mit dem Steuergerät zu verbinden.

Die Erfindung betrifft weiterhin ein Bremssystem mit einem derartigen Sensormodul

Zudem betrifft die Erfindung ein Verfahren zum Betreiben des Sensormoduls.

### Stand der Technik

Sensormodule der eingangs genannten Art sind aus dem Stand der Technik prinzipiell bekannt. Beispielsweise offenbart die Patentschrift DE 10 2012 017 780 B4 ein als Mikrocontrollereinheit für Kraftfahrzeug ausgebildetes Sensormodul, das zumindest zwei Sensoreinheiten in Form von Sensoren des Kraftfahrzeugs zugeordneten bzw. zum Betreiben dieser Sensoren ausgebildeten Mikrocontrollern aufweist. Eine erste der Sensoreinheiten ist dabei als eine in einem Normalbetrieb aktive Hauptsensoreinheit ausgebildet, die diverse von den Sensoren sensierte Eingangsgrößen verarbeitet und basierend auf der Verarbeitung zumindest ein erstes Ausgangssignal erzeugt. Eine zweite der Sensoreinheiten ist als in einem Energiesparbetrieb aktiver Stand-by Mikrocontroller ausgebildet, welcher zumindest ein zweites Ausgangssignal erzeugt. Das erste und das zweite Ausgangssignal werden dabei über einen von den beiden Sensoreinheiten gemeinsam genutzten Sensorsignalausgang des Sensormoduls bereitgestellt.

Dem Sensormodul ist eine Spannungsquelle zugeordnet, die mit einem als Stromregelungsvorrichtung ausgebildeten Steuergerät des Sensormoduls verbunden ist. Dadurch ist unter Zwischenschaltung des Steuergeräts eine von der Spannungsquelle bereitgestellte Versorgungsspannung zum Betreiben des Sensormoduls bereitstellbar. Dabei ist das Steuergerät dazu ausgebildet, die Sensoreinheiten mit der Spannungsquelle elektrisch zu verbinden oder von dieser elektrisch zu trennen, wobei im Regelfall immer nur eine der Sensoreinheiten betrieben wird. Dazu fungiert das Steuergerät auch als Entscheidereinheit, welche dazu ausgebildet ist, entweder die erste oder die zweite Sensoreinheit mit der Spannungsquelle elektrisch zu verbinden.

Die Offenlegung DE10 054 745 A1 befasst sich mit einem Verfahren zur sicheren Übertragung von Sensorsignalen über Signalleitungen an eine elektronische Verarbeitungseinheit für eine Kraftfahrzeugbremsanlage.

Die Offenlegung DE 10 2009 008 483 A1 betrifft eine Einrichtung zum Messen einer physikalischen Größe in einem Kraftfahrzeug.

Die Offenlegung DE 10 2019 202 011 A1betrifft eine Sensoranordnung für ein Bremssystem eines Fahrzeugs, mit einer Anschlussschnittstelle eines Bremssystems.

Das Dokument EP 3 531 081 A1 betrifft Sensorvorrichtungen, Methoden und Sensorsysteme zur Positionsbestimmung von betätigten Objekten, insbesondere Vorrichtungen, Methoden und Systeme zur Positionsbestimmung von beweglichen Fahrzeugteilen mittels Magnetfeldsensoren, die rotierenden Magnetfeldern ausgesetzt sind.

### Offenbarung der Erfindung

Das Sensormodul mit den Merkmalen von Anspruch 1 hat den Vorteil, dass es einen vereinfachten technischen Aufbau aufweist. Erfindungsgemäß ist dazu vorgesehen, dass die Entscheidereinheit dazu ausgebildet ist, in Abhängigkeit von der eingestellten elektrischen Versorgungsspannung die erste Sensoreinheit oder die zweite Sensoreinheit elektrisch mit dem Steuergerät zu verbinden oder von diesem elektrisch zu trennen, und dass das Steuergerät dazu ausgebildet ist, die Versorgungsspannung zumindest im Energiesparbetrieb zu verändern, wenn das durch den Sensorsignalausgang bereitgestellte Ausgangssignal einen festgelegten Schwellenwert erreicht. Insbesondere ist das Steuergerät dazu ausgebildet, die Versorgungsspannung zu verändern, wenn das Ausgangssignal den Schwellenwert überschreitet oder unterschreitet. Die Auswahl, welche der beiden Sensoreinheiten betrieben wird, erfolgt also in Abhängigkeit der eingestellten elektrischen Versorgungsspannung, sodass das Sensormodul dazu ausgebildet ist, durch ein technisch vergleichsweise einfach umsetzbares

Einstellen seiner Versorgungsspannung die Aktivität der Sensoreinheiten zu steuern. Insofern ist zur Aktivierung beziehungsweise Deaktivierung der Sensoreinheiten keine zusätzliche Kommunikationsschnittstelle beziehungsweise kein zusätzliches Signal erforderlich, sodass das Sensormodul, insbesondere die Entscheidereinheit und die Sensoreinheiten, insbesondere kommunikationstechnisch vergleichsweise unkompliziert ausbildbar sind. Zudem gewährleistet die erfindungsgemäß vorgesehene Veränderung der Versorgungsspannung einen besonders energiesparenden Betrieb des Sensormoduls.

Gemäß einer bevorzugten Weiterbildung ist vorgesehen, dass das Steuergerät zumindest eine Schaltungseinheit zur Erkennung des durch den Sensorsignalausgang bereitgestellten Ausgangssignals aufweist. Dadurch kann das Ausgangssignal von dem Steuergerät selbst erkannt und verarbeitet werden, sodass hierfür keine zusätzliche und insbesondere kompliziert aufgebaute Auswerteeinheit erforderlich ist. Dadurch wird der Aufbau des Sensormoduls weiter vereinfacht. Insbesondere weist die Schaltungseinheit einen PullUp-Widerstand auf.

Insbesondere weist die Entscheidereinheit eine Zenerdiode (Z-Diode), einen Komparator oder eine Schaltung mit Operationsverstärker auf. Dies ermöglicht eine technisch besonders einfache Ausbildung der Entscheidereinheit.

Bevorzugt ist vorgesehen, dass den Sensoreinheiten jeweils ein von der Entscheidereinheit ansteuerbarer, insbesondere als Transistor ausgebildeter, Schalter zugeordnet ist, mittels welchem die jeweilige Sensoreinheit zur Versorgung der Sensoreinheit mit der Versorgungsspannung mit dem Steuergerät elektrisch verbindbar oder von diesem elektrisch trennbar ist. Vorteilhafterweise ist hierdurch das elektrische Verbinden beziehungsweise Trennen der Sensoreinheiten von dem Steuergerät technisch besonders einfach umsetzbar.

Vorzugsweise weisen die Sensoreinheiten jeweils einen OpenCollector- oder OpenDrain-Ausgang auf, mittels welchem die jeweilige Sensoreinheit mit dem Sensorsignalausgang elektrisch verbunden ist. Dadurch ergibt sich der Vorteil, dass eine der jeweils nicht aktiven Sensoreinheit zugeordnete Signalleitung und insbesondere der von den Sensoreinheiten gemeinsam genutzte Sensorsignalausgang nicht durch die inaktive Sensoreinheit belastet werden. Beide Sensoreinheiten sind weiterhin vorzugsweise mit dem Sensorsignalausgang verbunden, sodass kein zusätzlicher Umschalter, insbesondere Multiplexer, benötigt wird. Alternativ weist zumindest eine der Sensoreinheiten einen anderen abschaltbaren Ausgang, insbesondere einen Tri-State-Ausgang, auf.

Gemäß einer bevorzugten Weiterbildung ist die zweite Sensoreinheit als Standby-Sensor, insbesondere Hall-Schalter, ausgebildet. Der Aufbau des Sensormoduls wird dadurch weiter vereinfacht.

Das Bremssystem mit den Merkmalen von Anspruch 7 zeichnet sich dadurch aus, dass das Sensormodul erfindungsgemäß, wie vorstehend beschrieben, ausgebildet ist. Es ergeben sich die diesbezüglich bereits genannten Vorteile.

Das Verfahren zum Betreiben eines Sensormoduls mit den Merkmalen von Anspruch 8 zeichnet sich dadurch aus, dass in Abhängigkeit von der eingestellten elektrischen Versorgungsspannung entweder die erste Sensoreinheit oder die zweite Sensoreinheit elektrisch mit dem Steuergerät verbunden oder von diesem elektrisch getrennt wird, und dass die Versorgungsspannung zumindest im Energiesparbetrieb verändert wird, wenn das durch den Sensorsignalausgang bereitgestellte Ausgangssignal einen festgelegten Schwellenwert erreicht. Insbesondere wird die Versorgungsspannung verändert, wenn das Ausgangssignal den Schwellenwert überschreitet oder unterschreitet. Bevorzugt wird das von dem Sensorsignalausgang bereitgestellte Ausgangssignal von einer Schaltungseinheit des Steuergeräts erkannt, um die Versorgungsspannung zu verändern. Insbesondere wird die jeweilige Sensoreinheit mittels eines der Sensoreinheit zugeordneten und von der Entscheidereinheit ansteuerbaren Schalters, insbesondere Transistor, zur Versorgung der Sensoreinheit mit der Versorgungsspannung elektrisch mit dem Steuergerät verbunden oder von diesem elektrisch getrennt. Es ergeben sich jeweils die zuvor bereits genannten Vorteile.

Das Verfahren zum Betreiben eines Bremssystems, insbesondere des zuvor beschriebenen Bremssystems, mit den Merkmalen von Anspruch 11 zeichnet sich dadurch aus, dass das Sensormodul gemäß dem vorstehend beschriebenen Verfahren zum Betreiben eines Sensormoduls betrieben wird. Es ergeben sich die diesbezüglich bereits genannten Vorteile.

Bevorzugte Merkmale und Merkmalskombinationen ergeben sich insbesondere aus dem zuvor Beschriebenen sowie den Ansprüchen. Im Folgenden soll die Erfindung anhand der Figuren näher erläutert werden. Dazu zeigen:
- Figur 1: eine stark vereinfachte schematische Darstellung eines vorteilhaften Bremssystems mit einem vorteilhaften Sensormodul, und
- Figur 2: ein schematisches Ablaufdiagramm eines vorteilhaften Verfahrens zum Betreiben des Bremssystems beziehungsweise des Sensormoduls.

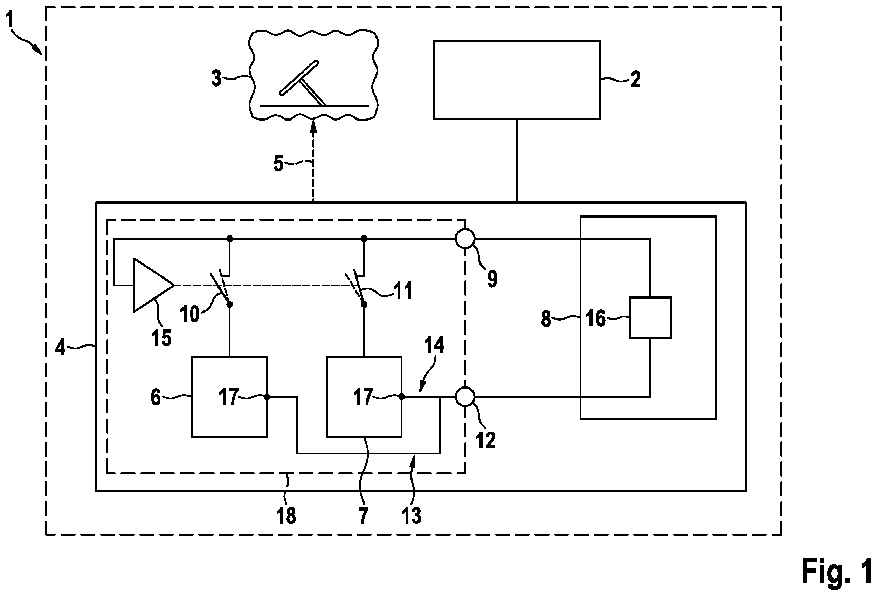

Figur 1 zeigt ein vorteilhaftes Bremssystem 1 für ein vorliegend nicht gezeigtes Kraftfahrzeug in einer stark vereinfachten schematischen Darstellung. Das Bremssystem 1 weist einen in Figur 1 nur beispielhaft dargestellten elektromechanischen Bremskraftverstärker 2, ein vorliegend symbolisch dargestelltes und als Bremspedal des Kraftfahrzeugs ausgebildetes Stellelement 3 sowie ein Sensormodul 4 auf. Das Sensormodul 4 dient dazu, den Bremskraftverstärker 2 basierend auf einer von einem Benutzer des Kraftfahrzeugs verursachten Verlagerung des Stellelements 3 anzusteuern, um eine Bremskraft zum Verzögern des Kraftfahrzeugs zu erzeugen. Dazu ist das Sensormodul 4 dem Stellelement 3, wie in Figur 1 beispielhaft anhand eines gestrichelten Pfeils 5 dargestellt, zugeordnet und dazu ausgebildet, den Bremskraftverstärker 2 in Abhängigkeit einer Verlagerung des Stellelements 3 anzusteuern.

Das Sensormodul 4 weist gemäß dem Vorliegen Ausführungsbeispiel zwei Sensoreinheiten 6, 7 auf, welche vorliegend zum Sensieren der Verlagerung des Stellelements 3 dienen. Das Sensormodul 4 weist weiterhin ein Steuergerät 8 auf, welches dazu ausgebildet ist, eine elektrische Versorgungsspannung, die gemäß dem vorliegenden Ausführungsbeispiel von einer in Figur 1 nicht gezeigten Spannungsquelle bereitgestellt wird, für die Sensoreinheiten 6, 7 einzustellen. Zur Versorgung der Sensoreinheiten 6, 7 mit der Versorgungsspannung sind diese unter Verwendung eines Versorgungsanschlusses 9 und zweier Schalter 10, 11, die jeweils einer der Sensoreinheiten 6, 7 zugeordnet sind, mit dem Steuergerät 8 elektrisch verbunden oder von diesem elektrisch trennbar. Das Sensormodul 4 weist weiterhin einen von den Sensoreinheiten 6, 7 gemeinsam genutzten Sensorsignalausgang 12 auf, mit welchem die beiden Sensoreinheiten 6, 7 stets elektrisch verbunden sind. Der Sensorsignalausgang 12 wiederum ist mit dem Steuergerät 8 elektrisch verbunden, um dem Steuergerät 8 von den Sensoreinheiten 6, 7 erzeugte Ausgangssignale 13, 14 zur weiteren Verarbeitung bereitzustellen, wie an späterer Stelle noch näher erläutert wird.

Eine erste Sensoreinheit 6 ist dabei gemäß dem vorliegenden Ausführungsbeispiel als ein in einem Normalbetrieb des Sensormoduls 4 aktiver Betriebssensor ausgebildet, welcher im Normalbetrieb ein erstes Ausgangssignal 13 über den Sensorsignalausgang 12 bereitstellt. Eine zweite Sensoreinheit 7 ist gemäß dem vorliegenden Ausführungsbeispiel als Standby-Sensor, insbesondere Hall-Schalter, ausgebildet, welcher in einem Energiesparbetrieb des Sensormoduls 4, bei welchem die erste Sensoreinheit 6 inaktiv ist, ein zweites Ausgangssignal 14, welches sich von dem ersten Ausgangssignal 13 unterscheidet, über den Sensorsignalausgang 12 bereitstellt. Insofern dient der Sensorsignalausgang 12 vorteilhafterweise sowohl zur Bereitstellung des ersten Ausgangssignals 13, als auch zur Bereitstellung des zweiten Ausgangssignals 14. Um dabei eine Überlagerung und damit Beeinträchtigung der Ausgangssignale 13, 14 zu vermeiden, ist es jedoch erforderlich, dass stets nur eine der Sensoreinheiten 6, 7 in Betrieb ist oder zumindest das jeweilige Ausgangssignal erzeugt. Insofern ist stets einer der Schalter 10, 11 geschlossen, während der andere Schalter 11, 10 geöffnet ist, sodass stets nur eine der Sensoreinheiten mit der Versorgungsspannung versorgt und damit aktiv ist. Um dies zu gewährleisten beziehungsweise zu steuern, weist das Sensormodul 4 weiterhin eine Entscheidereinheit 15 auf, die insbesondere eine Zenerdiode, einen Komparator oder eine Schaltung mit Operationsverstärker aufweist, und dazu ausgebildet ist, durch Ansteuerung der Schalter 10, 11 entweder die erste Sensoreinheit 6 oder die zweite Sensoreinheit 7 elektrisch mit dem Steuergerät 8 zu verbinden beziehungsweise elektrisch von diesem zu trennen.

Vorteilhafterweise ist dabei vorgesehen, dass die Auswahl, welche der beiden Sensoreinheiten 6, 7 elektrisch mit dem Steuergerät 8 zu verbinden ist und insofern betrieben werden soll, durch eine von dem Steuergerät 8 bewirkte Einstellung der Versorgungsspannung gesteuert wird. Hierzu ist die Entscheidereinheit 15 dazu ausgebildet, in Abhängigkeit von der eingestellten elektrischen Versorgungsspannung die erste Sensoreinheit 6 oder die zweite Sensoreinheit 7 elektrisch mit dem Steuergerät 8 zu verbinden. Insofern ist die Entscheidereinheit 15 dazu ausgebildet, eine Veränderung der Versorgungsspannung zu erkennen sowie darauf basierend zu entscheiden, welche der beiden Sensoreinheiten 6, 7 mit dem Steuergerät 8 beziehungsweise der Versorgungsspannung elektrisch verbunden und dadurch betrieben werden soll. Die entsprechende Einstellung beziehungsweise Veränderung der Versorgungsspannung wiederum erfolgt durch das Steuergerät 8 in Abhängigkeit des durch den Signalausgang 12 bereitgestellten Ausgangssignals 13, 14 und zwar insbesondere dann, wenn das aktuell durch den Sensorsignalausgang 12 bereitgestellte Ausgangssignal 13, 14 einen festgelegten Schwellenwert erreicht. Zur Erkennung beziehungsweise Auswertung des entsprechenden Ausgangssignals 13,14 weist das Steuergerät 8 zumindest eine Schaltungseinheit 16, insbesondere mit einem PullUp-Widerstand, auf. Damit ist das Steuergerät 8 dazu in der Lage, ein Erreichen des festgelegten Schwellenwerts zu erkennen und darauf basierend die Versorgungsspannung einzustellen.

Wie vorstehend bereits erwähnt, wird der Sensorsignalausgang 12 sowohl zur Bereitstellung des ersten Ausgangssignals 13, als auch zur Bereitstellung des zweiten Ausgangssignals 14 genutzt. Um dabei entsprechende dem Sensorsignalausgang 12 zugeordnete Signalleitungen nicht unnötig zu belasten, ist gemäß dem vorliegenden Ausführungsbeispiel vorgesehen, dass die Sensoreinheiten 6 ,7 jeweils einen OpenDrain- oder OpenCollector-Ausgang 17 aufweisen, mittels welchem die Sensoreinheiten 6, 7 mit dem Sensorsignalausgang 12 verbunden sind. Die Versorgungsspannung wird dann verändert, wenn ein Spannungspegel des OpenDrain- oder OpenCollector-Ausgangs 17 als Ausgangssignal 13, 14 den Schwellenwert unterschreitet.

Gemäß dem vorliegenden Ausführungsbeispiel sind das Steuergerät 8, die Sensoreinheiten 6, 7 und die Entscheidereinheit 15 diskret, also als separate Elemente, ausgebildet und mittels Kabel oder Leitungen miteinander verbunden. Optional können jedoch zumindest die Entscheidereinheit 15 und die Sensoreinheiten 6,7 auf einer gemeinsamen Leiterplatte 18 angeordnet sein, wie in Figur 1 beispielhaft durch gestrichelte Linien dargestellt ist. Insbesondere sind die Sensoreinheiten 6, 7 und die Entscheidereinheit 15 auf einem gemeinsamen Halbleiterchip ausgebildet.

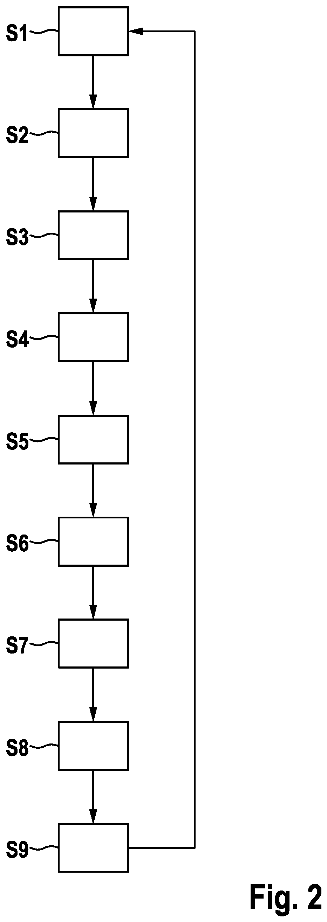

Im Folgenden wird nunmehr anhand des in Figur 2 gezeigten schematischen Ablaufdiagramms ein vorteilhaftes Verfahren zum Betreiben des Bremssystems 1 beziehungsweise dessen Sensormoduls 4 erläutert.

Das Verfahren beginnt in einem ersten Schritt S1, in welchem sich das Bremssystem 1 beziehungsweise das Sensormodul 4 im Energiesparmodus befindet. Daher ist zu diesem Zeitpunkt die zweite Sensoreinheit 7 aktiv und die erste Sensoreinheit 6 inaktiv und insofern der zweite Schalter 11 geschlossen und der erste Schalter 10 geöffnet, wie in Figur 1 gezeigt dargestellt ist. Dementsprechend ist in Schritt S1 die zweite Sensoreinheit 7 elektrisch mit dem Steuergerät 8 verbunden und wird mittels der Versorgungsspannung betrieben. In einem zweiten Schritt S2 wird nunmehr das Stellelement 3 von dem Benutzer des Kraftfahrzeugs betätigt. Dies wird von der zweiten Sensoreinheit 7 sensiert und daraufhin das zweite Ausgangssignal 14 durch den Sensorsignalausgang 12 für das Steuergerät 8 bereitgestellt. In einem darauf folgenden Schritt S3 erkennt die Schaltungseinheit 16, dass das zweite Ausgangssignal 14 den festgelegten Schwellenwert erreicht, woraufhin das Steuergerät 8 die Versorgungsspannung verändert, vorzugsweise erhöht. Infolgedessen wird über den Versorgungsanschluss 9 eine veränderte, insbesondere erhöhte, Versorgungsspannung bereitgestellt. In einem nächsten Schritt S4 wird die Veränderung der Versorgungsspannung von der Entscheidereinheit 15 erkannt und daraufhin der zweite Schalter 11 geöffnet und der erste Schalter 10 geschlossen, um die zweite Sensoreinheit 7 zu deaktivieren und die erste Sensoreinheit 6 zu aktivieren. In einem weiteren Schritt S5 sensiert die erste Sensoreinheit 6 daraufhin die weitere beziehungsweise fortlaufende Verlagerung des Stellelements 3 und stellt infolgedessen das erste Ausgangssignal 13 über den Sensorsignalausgang 12 für das Steuergerät 8 bereit. Das erste Ausgangssignal 13 weist dabei ein Protokoll zum Betreiben des Bremskraftverstärkers 2 auf und wird in einem weiteren Schritt S6 von dem Steuergerät 8 ausgewertet. Basierend auf dieser Auswertung wird in einem nächsten Schritt S7 durch das Steuergerät 8 beziehungsweise das Sensormodul 4 der Bremskraftverstärker 2 angesteuert, um den durch die Betätigung des Stellelements 3 geäußerten Verzögerungswunsch des Benutzers Bremskraft zu realisieren. Wird im Anschluss in einem weiteren Schritt S8 eine Anforderung zum Wechseln des Bremssystems 1 zurück in den Energiesparmodus erkannt, beispielsweise wenn der Benutzer das Kraftfahrzeug abgestellt oder verlassen hat, so wird das erste Ausgangssignal 13 derart verändert, dass es einen festgelegten Schwellenwert erreicht, sodass durch das Steuergerät 8 erkannt wird, dass die Versorgungsspannung erneut verändert werden soll. In einem abschließenden Schritt S9 wird daraufhin die Versorgungsspannung von dem Steuergerät 8 erneut verändert, insbesondere reduziert, sodass die Entscheidereinheit 15 durch entsprechendes Ansteuern der beiden Schalter 10, 11 die erste Sensoreinheit 6 deaktiviert und die zweite Sensoreinheit 7 wieder aktiviert. Anschließend beginnt das Verfahren erneut mit Schritt S1.

## Patentansprüche

1. Sensormodul (4) mit zumindest zwei Sensoreinheiten (6, 7), einem Steuergerät (8), das dazu ausgebildet ist, eine elektrische Versorgungsspannung für die Sensoreinheiten (6, 7) einzustellen, und mit zumindest einem Sensorsignalausgang (12), wobei die zumindest zwei Sensoreinheiten (6, 7) mit dem Steuergerät (8) elektrisch verbindbar oder von diesem elektrisch trennbar und mit dem Sensorsignalausgang (12) elektrisch verbunden sind, wobei eine erste der Sensoreinheiten (6) in einem Normalbetrieb des Sensormoduls (4) ein erstes Ausgangssignal (13) durch den Sensorsignalausgang (12) und eine zweite der Sensoreinheiten (7) in einem Energiesparbetrieb des Sensormoduls (4) ein zweites Ausgangssignal (14) durch den Sensorsignalausgang (12) bereitstellt, und wobei dem Steuergerät (8) eine Entscheidereinheit (15) zugeordnet ist, die dazu ausgebildet ist, entweder die erste Sensoreinheit (6) oder die zweite Sensoreinheit (7) elektrisch mit dem Steuergerät (8) zu verbinden, wobei die Entscheidereinheit (15) dazu ausgebildet ist, in Abhängigkeit von der eingestellten elektrischen Versorgungsspannung die erste Sensoreinheit (6) oder die zweite Sensoreinheit (7) elektrisch mit dem Steuergerät (8) zu verbinden oder von diesem elektrisch zu trennen, und dass das Steuergerät (8) dazu ausgebildet ist, die Versorgungsspannung zumindest im Energiesparbetrieb zu verändern, wenn das durch den Sensorsignalausgang (12) bereitgestellte Ausgangssignal (13, 14) einen festgelegten Schwellenwert erreicht.

2. Sensormodul nach Anspruch 1, **dadurch gekennzeichnet, dass** das Steuergerät (8) zumindest eine Schaltungseinheit (16), insbesondere mit einem PullUp-Widerstand, zur Erkennung des durch den Sensorsignalausgang (12) bereitgestellten Ausgangssignals (13, 14) aufweist.

3. Sensormodul nach einem der vorhergehenden Ansprüche, **dadurch gekennzeichnet, dass** die Entscheidereinheit (15) eine Zenerdiode, einen Komparator oder eine Schaltung mit Operationsverstärker aufweist.

4. Sensormodul nach einem der vorhergehenden Ansprüche, **dadurch gekennzeichnet, dass** den Sensoreinheiten (6, 7) jeweils ein von der Entscheidereinheit (15) ansteuerbarer, insbesondere als Transistor ausgebildeter, Schalter (10, 11) zugeordnet ist, mittels welchem die jeweilige Sensoreinheit (6, 7) zur Versorgung der Sensoreinheit (6, 7) mit der Versorgungsspannung mit dem Steuergerät (8) elektrisch verbindbar oder von diesem elektrisch trennbar ist.

5. Sensormodul nach einem der vorhergehenden Ansprüche, **dadurch gekennzeichnet, dass** die Sensoreinheiten (6, 7) jeweils einen OpenCollector-Ausgang, einen OpenDrain-Ausgang (17), oder einen anderweitig abschaltbaren Ausgang, insbesondere einen Tri-State-Ausgang, aufweisen, mittels welchem die jeweilige Sensoreinheit (6, 7) mit dem Sensorignalausgang (12) elektrisch verbunden ist.

6. Sensormodul nach einem der vorhergehenden Ansprüche, **dadurch gekennzeichnet, dass** die zweite Sensoreinheit (7) als Standby-Sensor, insbesondere Hall-Schalter, ausgebildet ist.

7. Bremssystem (1) mit einem Bremskraftverstärker (2), insbesondere elektromechanischer oder elektrohydraulischer Bremskraftverstärker, einem von einem Benutzer verlagerbaren Stellelement (3), insbesondere Bremspedal, und mit einem dem Stellelement (3) zugeordneten Sensormodul (4), das dazu ausgebildet ist, den Bremskraftverstärker (2) in Abhängigkeit einer Verlagerung des Stellelements (3) anzusteuern, **gekennzeichnet durch** eine Ausbildung des Sensormoduls (4) nach einem der Ansprüche 1 bis 6.

8. Verfahren zum Betreiben eines Sensormoduls, das zumindest zwei Sensoreinheiten (6, 7), ein Steuergerät (8), das dazu ausgebildet ist, eine elektrische Versorgungsspannung für die Sensoreinheiten (6, 7) einzustellen, und zumindest einen Sensorsignalausgang (12) aufweist, wobei die zumindest zwei Sensoreinheiten (6, 7) mit dem Steuergerät (8) elektrisch verbindbar oder von diesem elektrisch trennbar und mit dem Sensorsignalausgang (12) elektrisch verbunden sind, wobei eine erste der Sensoreinheiten (6) in einem Normalbetrieb des Sensormoduls (4) ein erstes Ausgangssignal (13) durch den Sensorsignalausgang (12) und eine zweite der Sensoreinheiten (7) in einem Energiesparbetrieb des Sensormoduls (4) ein zweites Ausgangssignal (14), welches sich von dem ersten Ausgangssignal (13) unterscheidet, durch den Sensorsignalausgang (12) bereitstellt, und wobei dem Steuergerät (8) eine Entscheidereinheit (15) zugeordnet ist, die dazu ausgebildet ist, entweder die erste Sensoreinheit (6) oder die zweite Sensoreinheit (7) elektrisch mit dem Steuergerät (8) zu verbinden, wobei in Abhängigkeit von der eingestellten elektrischen Versorgungsspannung entweder die erste Sensoreinheit (6) oder die zweite Sensoreinheit (7) elektrisch mit dem Steuergerät (8) verbunden oder von diesem elektrisch getrennt wird, und dass die Versorgungsspannung zumindest im Energiesparbetrieb verändert wird, wenn das durch den Sensorsignalausgang (12) bereitgestellte Ausgangssignal (13, 14) einen festgelegten Schwellenwert erreicht.

9. Verfahren nach Anspruch 8, **dadurch gekennzeichnet, dass** das von dem Sensorsignalausgang (12) bereitgestellte Ausgangssignal (13, 14) von einer Schaltungseinheit (16) des Steuergeräts (8) erkannt wird, um die Versorgungsspannung zu verändern.

10. Verfahren nach Anspruch 8 oder 9, **dadurch gekennzeichnet, dass** die jeweilige Sensoreinheit (6, 7) mittels eines der Sensoreinheit (6, 7) zugeordneten und von der Entscheidereinheit (15) ansteuerbaren Schalters (10, 11), insbesondere Transistor, zur Versorgung der Sensoreinheit (6, 7) mit der Versorgungsspannung elektrisch mit dem Steuergerät (8) verbunden oder von diesem elektrisch getrennt wird.

11. Verfahren zum Betreiben eines Bremssystems (1), insbesondere Bremssystem nach Anspruch 7, das einen Bremskraftverstärker (2), insbesondere elektromechanischer oder elektrohydraulischer Bremskraftverstärker, ein von einem Benutzer verlagerbares Stellelement (3), insbesondere Bremspedal, und ein dem Stellelement (3) zugeordnetes Sensormodul (4) aufweist, wobei der Bremskraftverstärker (2) in Abhängigkeit einer Verlagerung des Stellelements (3) von dem Sensormodul (4) angesteuert wird, **dadurch gekennzeichnet, dass** das Sensormodul (4) gemäß dem Verfahren nach einem der Ansprüche 8 bis 10 betrieben wird.

## Claims

1. Sensor module (4) having at least two sensor units (6, 7), a control device (8) which is designed to set an electrical supply voltage for the sensor units (6, 7), and having at least one sensor signal output (12), wherein the at least two sensor units (6, 7) are able to be electrically connected to or electrically disconnected from the control device (8) and are electrically connected to the sensor signal output (12), wherein a first of the sensor units (6) in a normal mode of the sensor module (4) provides a first output signal (13) through the sensor signal output (12) and a second of the sensor units (7) in an energy-saving mode of the sensor module (4) provides a second output signal (14) through the sensor signal output (12), and wherein the control device (8) is assigned a decision-making unit (15) which is designed to electrically connect either the first sensor unit (6) or the second sensor unit (7) to the control device (8), wherein the decision-making unit (15) is designed to electrically connect or electrically disconnect the first sensor unit (6) or the second sensor unit (7) to/from the control device (8) in dependence on the set electrical supply voltage, and in that the control device (8) is designed to change the supply voltage at least in the energy-saving mode if the output signal (13, 14) provided by the sensor signal output (12) reaches a defined threshold value.

2. Sensor module according to Claim 1, **characterized in that** the control device (8) has at least one switching unit (16), in particular having a pull-up resistor, for detecting the output signal (13, 14) provided by the sensor signal output (12).

3. Sensor module according to either of the preceding claims, **characterized in that** the decision-making unit (15) has a Zener diode, a comparator or a circuit having an operational amplifier.

4. Sensor module according to one of the preceding claims, **characterized in that** each of the sensor units (6, 7) is assigned a switch (10, 11), in particular in the form of a transistor, which is able to be controlled by the decision-making unit (15) and by means of which the respective sensor unit (6, 7) is able to be electrically connected to the control device (8), for the purpose of supplying the sensor unit (6, 7) with the supply voltage, or is able to be electrically disconnected therefrom.

5. Sensor module according to one of the preceding claims, **characterized in that** the sensor units (6, 7) each have an open-collector output, an open-drain output (17), or an output which is able to be switched off in another way, in particular a tri-state output, by means of which the respective sensor unit (6, 7) is electrically connected to the sensor signal output (12).

6. Sensor module according to one of the preceding claims, **characterized in that** the second sensor unit (7) is in the form of a standby sensor, in particular a Hall-effect switch.

7. Brake system (1) having a brake booster (2), in particular an electromechanical or electrohydraulic brake booster, an actuation element (3) which is able to be moved by a user, in particular a brake pedal, and having a sensor module (4) which is assigned to the actuation element (3) and is designed to control the brake booster (2) in dependence on a movement of the actuation element (3), **characterized by** a design of the sensor module (4) according to one of Claims 1 to 6.

8. Method for operating a sensor module which has at least two sensor units (6, 7), a control device (8) which is designed to set an electrical supply voltage for the sensor units (6, 7), and at least one sensor signal output (12), wherein the at least two sensor units (6, 7) are able to be electrically connected to or electrically disconnected from the control device (8) and are electrically connected to the sensor signal output (12), wherein a first of the sensor units (6) in a normal mode of the sensor module (4) provides a first output signal (13) through the sensor signal output (12) and a second of the sensor units (7) in an energy-saving mode of the sensor module (4) provides a second output signal (14), which differs from the first output signal (13), through the sensor signal output (12), and wherein the control device (8) is assigned a decision-making unit (15) which is designed to electrically connect either the first sensor unit (6) or the second sensor unit (7) to the control device (8), wherein either the first sensor unit (6) or the second sensor unit (7) is electrically connected to or electrically disconnected from the control device (8) in dependence on the set electrical supply voltage, and in that the supply voltage at least in the energy-saving mode is changed if the output signal (13, 14) provided by the sensor signal output (12) reaches a defined threshold value.

9. Method according to Claim 8, **characterized in that** the output signal (13, 14) provided by the sensor signal output (12) is detected by a switching unit (16) of the control device (8) in order to change the supply voltage.

10. Method according to Claim 8 or 9, **characterized in that** the respective sensor unit (6, 7) is electrically connected to the control device (8), for the purpose of supplying the sensor unit (6, 7) with the supply voltage, or is electrically disconnected therefrom by means of a switch (10, 11), in particular a transistor, which is assigned to the sensor unit (6, 7) and is able to be controlled by the decision-making unit (15).

11. Method for operating a brake system (1), in particular a brake system according to Claim 7, which has a brake booster (2), in particular an electromechanical or electrohydraulic brake booster, an actuation element (3) which is able to be moved by a user, in particular a brake pedal, and a sensor module (4) which is assigned to the actuation element (3), wherein the brake booster (2) is controlled by the sensor module (4) in dependence on a movement of the actuation element (3), **characterized in that** the sensor module (4) is operated according to the method according to one of Claims 8 to 10.

## Revendications

1. Module capteur (4) comprenant au moins deux unités de capteur (6, 7), un dispositif de commande (8) qui est configuré pour régler une tension d'alimentation électrique pour les unités de capteur (6, 7), et comprenant au moins une sortie (12) de signal de capteur, les au moins deux unités de capteur (6, 7) pouvant être reliées électriquement au dispositif de commande (8) ou pouvant être déconnectées électriquement de celui-ci et étant reliées électriquement à la sortie (12) de signal de capteur, une première des unités de capteur (6) fournissant, dans un fonctionnement normal du module capteur (4), un premier signal de sortie (13) par la sortie (12) de signal de capteur et une deuxième des unités de capteur (7), dans un mode d'économie d'énergie du module de capteur (4), fournissant un deuxième signal de sortie (14) par la sortie (12) de signal de capteur, et une unité de décision (15) étant associée au dispositif de commande (8), laquelle est configurée pour relier électriquement soit la première unité de capteur (6), soit la deuxième unité de capteur (7) au dispositif de commande (8), l'unité de décision (15) étant configurée pour relier électriquement la première unité de capteur (6) ou la deuxième unité de capteur (7) au dispositif de commande (8) ou pour les déconnecter électriquement de celui-ci en fonction de la tension d'alimentation électrique réglée, et le dispositif de commande (8) étant configuré pour modifier la tension d'alimentation au moins dans le mode d'économie d'énergie lorsque le signal de sortie (13, 14) fourni par la sortie (12) de signal de capteur atteint une valeur de seuil spécifiée.

2. Module capteur selon la revendication 1, **caractérisé en ce que** le dispositif de commande (8) possède au moins une unité de commutation (16), notamment avec une résistance de tirage au positif, destinée à reconnaître le signal de sortie (13, 14) fourni par la sortie (12) de signal de capteur.

3. Module capteur selon l'une des revendications précédentes, **caractérisé en ce que** l'unité de décision (15) possède une diode Zener, un comparateur ou un circuit avec amplificateur opérationnel.

4. Module capteur selon l'une des revendications précédentes, **caractérisé en ce qu'**aux unités de capteur (6, 7) est respectivement associé un commutateur (10, 11) pouvant être commandé par l'unité de décision (15), notamment réalisé sous la forme d'un transistor, au moyen duquel l'unité de capteur (6, 7) respective peut être reliée électriquement au dispositif de commande (8) en vue d'alimenter l'unité de capteur (6, 7) avec la tension d'alimentation ou être déconnectée électriquement de celui-ci.

5. Module capteur selon l'une des revendications précédentes, **caractérisé en ce que** les unités de capteur (6, 7) possèdent respectivement une sortie à collecteur ouvert, une sortie à drain ouvert (17), ou une sortie pouvant être mise hors circuit d'une autre manière, notamment une sortie à trois états, au moyen de laquelle l'unité de capteur (6, 7) respective est reliée électriquement à la sortie (12) de signal de capteur.

6. Module capteur selon l'une des revendications précédentes, **caractérisé en ce que** la deuxième unité de capteur (7) est réalisée sous la forme d'un capteur de veille, notamment un commutateur à effet Hall.

7. Système de freinage (1) comprenant un servofrein (2), notamment un servofrein électromécanique ou électrohydraulique, un élément de réglage (3) pouvant être déplacé par un utilisateur, notamment une pédale de frein, et comprenant un module capteur (4) associé à l'élément de réglage (3), lequel est configuré pour commander le servofrein (2) en fonction d'un déplacement de l'élément de réglage (3), **caractérisé par** une configuration du module capteur (4) selon l'une des revendications 1 à 6.

8. Procédé pour faire fonctionner un module capteur, qui possède au moins deux unités de capteur (6, 7), un dispositif de commande (8) qui est configuré pour régler une tension d'alimentation électrique pour les unités de capteur (6, 7), et au moins une sortie (12) de signal de capteur, les au moins deux unités de capteur (6, 7) pouvant être reliées électriquement au dispositif de commande (8) ou pouvant être déconnectées électriquement de celui-ci et étant reliées électriquement à la sortie (12) de signal de capteur, une première des unités de capteur (6) fournissant, dans un fonctionnement normal du module capteur (4), un premier signal de sortie (13) par la sortie (12) de signal de capteur et une deuxième des unités de capteur (7), dans un mode d'économie d'énergie du module de capteur (4), fournissant un deuxième signal de sortie (14), lequel se différencie du premier signal de sortie (13), par la sortie (12) de signal de capteur, et une unité de décision (15) étant associée au dispositif de commande (8), laquelle est configurée pour relier électriquement soit la première unité de capteur (6), soit la deuxième unité de capteur (7) au dispositif de commande (8), soit la première unité de capteur (6), soit la deuxième unité de capteur (7) étant reliée électriquement au dispositif de commande (8) ou étant déconnectée électriquement de celui-ci en fonction de la tension d'alimentation électrique réglée, et la tension d'alimentation étant modifiée au moins dans le mode d'économie d'énergie lorsque le signal de sortie (13, 14) fourni par la sortie de signal de capteur (12) atteint une valeur de seuil spécifiée.

9. Procédé selon la revendication 8, **caractérisé en ce que** le signal de sortie (13, 14) fourni par la sortie (12) de signal de capteur est reconnu par une unité de commutation (16) du dispositif de commande (8) afin de modifier la tension d'alimentation.

10. Procédé selon la revendication 8 ou 9, **caractérisé en ce que** l'unité de capteur (6, 7) respective est reliée électriquement au dispositif de commande (8) ou est séparée électriquement de celui-ci au moyen d'un commutateur (10, 11) associé à l'unité de capteur (6, 7) et pouvant être commandé par l'unité de décision (15), notamment un transistor, en vue d'alimenter l'unité de capteur (6, 7) avec la tension d'alimentation.

11. Procédé pour faire fonctionner un système de freinage (1), notamment un système de freinage selon la revendication 7, qui possède un servofrein (2), notamment un servofrein électromécanique ou électrohydraulique, un élément de réglage (3) pouvant être déplacé par un utilisateur, notamment une pédale de frein, et un module capteur (4) associé à l'élément de réglage (3), le servofrein (2) étant commandé par le module capteur (4) en fonction d'un déplacement de l'élément de réglage (3), **caractérisé en ce que** le module capteur (4) fonctionne conformément au procédé selon l'une des revendications 8 à 10.
